# EUROPEAN PATENT APPLICATION

(11) **EP 4 329 069 A1**
(43) Date of publication of application: **28.02.2024**
(21) Application number: 21958674.0
(22) Date of filing: 28.09.2021
(51) Int. Cl.: H01M 50/30, H01M 10/60

(54) **BATTERY, ELECTRICAL APPARATUS, METHOD AND APPARATUS FOR PREPARING BATTERY**

(71) Applicant: Contemporary Amperex Technology Co., Limited, Fujian PRC 352100 (CN)
(72) Inventor: LI, Yao, Ningde, Fujian 352100 (CN); CHEN, Xiaobo, Ningde, Fujian 352100 (CN); JIN, Qiu, Ningde, Fujian 352100 (CN)
(74) Representative: Gong, Jinping
(86) International application number: PCT/CN2021/121395
(87) International publication number: WO 2023/050078

(57) **Abstract**

Provided are a battery (10), an electric apparatus, a method (600) for preparing battery (10), and an apparatus (700) for preparing battery (10). The battery (10) includes: a plurality of battery cells (20), including first battery cells (20a) and second battery cells (20b), where a pressure relief mechanism (213) is provided on both a first wall (201a) of the first battery cell (20a) and a second wall (202b) of the second battery cell (20b); and a thermal management component (30), configured to accommodate fluid to regulate temperatures of the plurality of battery cells (20), where the thermal management component (30) is attached to the first wall (201a) of the first battery cell (20a) and a first wall (201b) of the second battery cell (20b), and is provided with a pressure relief region (301) at a position corresponding to the pressure relief mechanism (213) of the first battery cell (20a), to discharge emissions from the first battery cell (20a) when the pressure relief mechanism (213) of the first battery cell (20a) is actuated.

## Description

### TECHNICAL FIELD

Embodiments of this application relate to the field of batteries, and more specifically, to a battery, an electrical apparatus, a method for preparing battery, and an apparatus for preparing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

In the development of battery technology, in addition to performance improvement, safety is another non-negligible issue. If the safety of a battery cannot be guaranteed, the battery cannot be used. Therefore, how safety performance of batteries is enhanced is an urgent technical problem that needs to be solved in battery technology.

### SUMMARY

This application provides a battery, an electric apparatus, a method for preparing battery, and an apparatus for preparing battery, so as to enhance safety of the battery.

According to a first aspect, a battery is provided, including: a plurality of battery cells, where the plurality of battery cells include first battery cells and second battery cells, a pressure relief mechanism is provided on both a first wall of the first battery cell and a second wall of the second battery cell, and the pressure relief mechanism is configured to be actuated when internal pressure or temperature of the battery cell provided with the pressure relief mechanism reaches a threshold, to relieve the internal pressure; and a thermal management component, configured to accommodate fluid to regulate temperatures of the plurality of battery cells, where the thermal management component is attached to the first wall of the first battery cell and a first wall of the second battery cell, the first wall of the second battery cell is different from the second wall of the second battery cell, the thermal management component is provided with a pressure relief region at a position corresponding to the pressure relief mechanism of the first battery cell, and the pressure relief region is used to discharge emissions from the first battery cell when the pressure relief mechanism of the first battery cell is actuated.

With the technical solution in this embodiment of this application, in the plurality of battery cells of the battery, the pressure relief mechanism of the first battery cell is disposed on the first wall of the first battery cell, and the pressure relief mechanism of the second battery cell is disposed on the second wall of the second battery cell. The thermal management component is attached to the first wall of the first battery cell on which the pressure relief mechanism is located and the first wall of the second battery cell on which no pressure relief mechanism is provided. Therefore, the first wall of the second battery cell attached to the thermal management component may completely be designed as a heat dissipation surface. With this technical solution, an overall heat dissipation area of the battery can be effectively increased, which improves safety performance of the battery and is conducive to the development of the fast battery charging technology. Further, because the thermal management component is attached to the first wall of the first battery cell on which the pressure relief mechanism is located and the first wall of the second battery cell on which no pressure relief mechanism is provided, it is only necessary to provide a pressure relief region at a position corresponding to the pressure relief mechanism of the first battery cell in the thermal management component, to discharge the emissions from the first battery cell, while a region corresponding to the second battery cell may still accommodate fluid to regulate a temperature of the second battery cell, further improving overall performance of the battery.

In some possible implementations, the thermal management component includes a flow channel for accommodating the fluid, where no flow channel is provided in the pressure relief region.

With the technical solution of this implementation, a region in the thermal management component corresponding to the pressure relief mechanism of the first battery cell is provided as a pressure relief region, and no flow channel and fluid are provided in the pressure relief region, to prevent the flow channel in the thermal management component from being impacted when the pressure relief mechanism of the first battery cell is actuated, wasting the fluid in the thermal management component, and affecting the temperature regulation effect of the thermal management component on the plurality of battery cells.

In some possible implementations, the thermal management component is provided with the flow channel at a position corresponding to the first wall of the second battery cell.

With the technical solution of this implementation, the flow channel in the thermal management component may be provided, fully covering the first wall of the second battery cell, and the flow channel with full coverage may provide good temperature regulation to the second battery cells, so as to improve the overall performance of the battery.

In some possible implementations, an electrode terminal is provided on both the second wall of the first battery cell and the second wall of the second battery cell; and the second wall of the first battery cell is a wall opposite the first wall of the first battery cell, and the second wall of the second battery cell is a wall opposite the first wall of the second battery cell.

With the technical solution of this implementation, the second wall of the first battery cell provided with the electrode terminal is a wall opposite the first wall of the first battery cell provided with the pressure relief mechanism, which can keep the emissions from the first battery cell discharged through the pressure relief mechanism away from the electrode terminal of the first battery cell to the greatest extent, so as to guarantee the safety performance of the battery. In addition, the second wall of the second battery cell provided with the pressure relief mechanism is a wall opposite the first wall of the second battery cell attached to the thermal management component, to minimize the influence of emissions from the second battery cell discharged through the pressure relief mechanism on the thermal management component. In addition, in the second battery cell, both the electrode terminal and the pressure relief mechanism are disposed on the second wall, to facilitate processing and installation of the electrode terminal and the pressure relief mechanism in the second battery cell and improve production efficiency of the battery.

In some possible implementations, the first battery cell and the second battery cell satisfy at least one of the following conditions: a specific capacity of a cathode material of the first battery cell is greater than that of a cathode material of the second battery cell; an energy density of the first battery cell is greater than that of the second battery cell; or a temperature of fumes discharged from the first battery cell when the pressure relief mechanism of the first battery cell is actuated is higher than that of fumes discharged from the second battery cell when the pressure relief mechanism of the second battery cell is actuated.

With the technical solution of this implementation, as compared with the first battery cell, a probability that the second battery cell undergoes thermal runaway is lower, or, even if the second battery cell undergoes thermal runaway, when the pressure relief mechanism of the second battery cell is actuated, as compared with the first battery cell, a temperature of the fumes discharged from the second battery cell is lower. Therefore, the influence on the second battery cell by the emissions from the second battery cell discharged through the pressure relief mechanism of the second battery cell may be reduced, improving safety performance of the battery. On this basis, as compared with the second battery cell, more electrical energy can be released per unit mass of the first battery cell, and/or more electrical energy can be stored per unit mass of the first battery cell, thereby helping improve overall performance of the battery.

In some possible implementations, the first battery cell and the second battery cell satisfy at least one of the following conditions: a mass specific capacity of the cathode material of the first battery cell is greater than or equal to 180 mAh/g, and a mass specific capacity of the cathode material of the second battery cell is less than or equal to 170 mAh/g; a mass energy density of the first battery cell is greater than or equal to 230 wh/kg, and a mass energy density of the second battery cell is less than or equal to 220 wh/kg; or the temperature of fumes discharged from the first battery cell when the pressure relief mechanism of the first battery cell is actuated is higher than or equal to 600°C, and the temperature of fumes discharged from the second battery cell when the pressure relief mechanism of the second battery cell is actuated is lower than or equal to 500°C.

In some possible implementations, the plurality of battery cells include at least one second battery cell, and a ratio of a quantity of the at least one second battery cell to a quantity of the plurality of battery cells ranges from 20% to 50%.

With the technical solution of this implementation, the ratio of the quantity of the at least one second battery cell to the quantity of the plurality of battery cells being less than or equal to 50% can guarantee that the quantity of the first battery cells accounts for more than half of the total quantity of the battery cells in the whole battery, to guarantee that the overall electrical performance of the battery is excellent, for example, a high energy density. In addition, the ratio of the quantity of the at least one second battery cell to the quantity of the plurality of battery cells being greater than or equal to 20% can guarantee the temperature regulation effect of the thermal management component on the second battery cell and the first battery cells surrounding the second battery cell, improving overall performance of the battery.

In some possible implementations, the plurality of battery cells include a row of battery cells arranged in a first direction, and in the row of battery cells, one second battery cell follows every N first battery cells, where N is a positive integer, and N<4.

With the technical solution of this implementation, a ratio of the quantity of the second battery cells in the row of battery cells to a total quantity of the row of battery cells ranges from 20% to 50%, so that the thermal management component provides good temperature regulation to the row of battery cells, and the battery cells in the row all have a relatively high energy density. In addition, in the row of battery cells, one second battery cell follows every N first battery cells, so that the second battery cell can be evenly located in the row of battery cells, enabling the thermal management component to provide uniform temperature regulation to the row of battery cells, further enhancing the temperature regulation effect of the thermal management component on the row of battery cells.

In some possible implementations, the second battery cell is arranged in an edge region of the plurality of battery cells.

Because the thermal management component provides good temperature regulation to the second battery cells, in the technical solution of this implementation, the second battery cells may be arranged in edge regions of the plurality of battery cells, so that the thermal management component regulates the temperatures of the second battery cells located in the edge regions of the plurality of battery cells, reducing the influence of an external environment on the second battery cells and improving overall performance of the battery.

In some possible implementations, the battery further includes: a collection chamber, configured to collect the emissions from the first battery cell when the pressure relief mechanism of the first battery cell is actuated; and a buffer member, disposed in the collection chamber and configured to improve pressure-resistant strength of the collection chamber.

With the technical solution of this implementation, the buffer member is provided in the collection chamber configured to collect the emissions from the first battery cell. Compared with a cavity structure, the buffer member can provide buffering and energy absorption in the collection chamber, so that the collection chamber provided with the buffer member has better pressure-resistant strength. In other words, when an external pressure acts on the battery, the collecting chamber provided with the buffer member can absorb most or all of the external pressure, thereby reducing or eliminating an influence of the external pressure on the thermal management component and electrical components such as battery cells in an electrical chamber and improving pressure resistance and safety performance of the battery. In some application scenarios, the battery may be installed on the chassis of the electric vehicle and provide electric power for driving the electric vehicle. Specifically, the collection chamber of the battery faces the chassis of the electric vehicle with respect to the electrical chamber. The electric vehicle may be subject to bumps, flying rocks, and other undesirable conditions during driving, which would produce impacts and bottom ball strikes on the chassis of the electric vehicle and even the battery mounted on the chassis. With the technical solution of this embodiment of this application, the buffer member in the collection chamber can provide good anti-impact and anti-bottom ball strike functions to reduce or eliminate an influence on the battery caused by the undesirable conditions encountered during driving of the electric vehicle and enhance impact resistance and safety performance of the battery, thus further improving safety performance of the electric vehicle.

In some possible implementations, the thermal management component is a wall of the collection chamber, and the buffer member is attached to a surface of the thermal management component away from the plurality of battery cells.

With the technical solution of this implementation, the buffer member is attached to the thermal management component, which can improve the pressure resistance of the thermal management component, and reduce or eliminate the damage caused by an external pressure to the thermal management component. In addition, the buffer member can play a role of heat preservation in addition to the pressure-resistance and buffering performance, which can maintain temperature of the fluid in the thermal management component, prevent a temperature change of the fluid in the thermal management component, and further guarantee the temperature regulation effect of the thermal management component, to improve performance of the battery.

In some possible implementations, the buffer member is provided with an opening, where the opening is disposed opposite the pressure relief region in the thermal management component and configured to allow passage of the emissions from the first battery cell that pass through the pressure relief region.

With the technical solution of this implementation, the buffer member also needs to be provided with an opening at a position corresponding to the pressure relief region, to allow the emissions to pass through and prevent the buffer member from blocking a discharge path of the emissions, thereby preventing the emissions from affecting the first battery cell and guaranteeing safety performance of the battery.

In some possible implementations, the buffer is provided with a gas channel, where the gas channel is configured to guide the emissions discharged from the first battery cell out of the buffer member.

With the technical solution of this implementation, the gas channel provided in the buffer member can guide out the emissions from the first battery cell, particularly high-temperature gas and/or high-temperature liquid in the emissions, to prevent the high-temperature emissions from being confined to the space in which the buffer member is located, thereby preventing potential safety hazards caused by the high-temperature emissions. In addition, the emissions can also dissipate heat in a process of flowing in the gas channel. The gas channel can be used to extend a movement path of the emissions in the collection chamber. If the emissions pass through the collection chamber and then are discharged to the outside of the battery, a temperature of the emissions traveling a longer movement path is lower, reducing an influence of the emissions on an external environment of the battery and further improving use safety of the battery.

In some possible implementations, a buffer member is provided in the collection chamber at a position corresponding to the second battery cell, to protection the second battery cell and enhance overall performance of the battery.

In some possible implementations, the buffer member is made of a porous energy absorbing material and/or a heat-preservation material.

Under the condition that the buffer member is made of a porous energy absorbing material, when an external pressure acts on the battery, the buffer member made of the porous energy absorbing material can absorb the external pressure and withstand most or even all of the external pressure, thereby reducing or eliminating an influence of the external pressure on the thermal management component and battery cells. Under the condition that the buffer member is made of a heat preservation material, the buffer member may maintain temperature of the fluid, prevent a temperature change of the fluid in the thermal management component, and further guarantee the temperature regulation effect of the thermal management component, to improve battery performance.

According to a second aspect, an electric apparatus is provided, including the battery in any one of the first aspect or the possible implementations of the first aspect, where the battery is configured to supply electric energy.

According to a third aspect, a method for preparing battery is provided, including: providing a plurality of battery cells, where the plurality of battery cells include first battery cells and second battery cells, a pressure relief mechanism is provided on both a first wall of the first battery cell and a second wall of the second battery cell, and the pressure relief mechanism is configured to be actuated when internal pressure or temperature of the battery cell provided with the pressure relief mechanism reaches a threshold, to relieve the internal pressure; providing a thermal management component, where the thermal management component is configured to accommodate fluid to regulate temperatures of the plurality of battery cells; and attaching the thermal management component to the first wall of the first battery cell and a first wall of the second battery cell; where the first wall of the second battery cell is different from the second wall of the second battery cell, the thermal management component is provided with a pressure relief region at a position corresponding to the pressure relief mechanism of the first battery cell, and the pressure relief region is used to discharge emissions from the first battery cell when the pressure relief mechanism of the first battery cell is actuated.

According to a fourth aspect, an apparatus for preparing battery is provided, including: a providing module, configured to: provide a plurality of battery cells, where the plurality of battery cells include first battery cells and second battery cells, a pressure relief mechanism is provided on both a first wall of the first battery cell and a second wall of the second battery cell, and the pressure relief mechanism is configured to be actuated when internal pressure or temperature of the battery cell provided with the pressure relief mechanism reaches a threshold, to relieve the internal pressure; and provide a thermal management component, where the thermal management component is configured to accommodate fluid to regulate temperatures of the plurality of battery cells; and a mounting module, configured to attach the thermal management component to the first wall of the first battery cell and a first wall of the second battery cell, where the first wall of the second battery cell is different from the second wall of the second battery cell, the thermal management component is provided with a pressure relief region at a position corresponding to the pressure relief mechanism of the first battery cell, and the pressure relief region is used to discharge emissions from the first battery cell when the pressure relief mechanism of the first battery cell is actuated.

With the technical solution in this embodiment of this application, in the plurality of battery cells of the battery, the pressure relief mechanism of the first battery cell is disposed on the first wall of the first battery cell, and the pressure relief mechanism of the second battery cell is disposed on the second wall of the second battery cell. The thermal management component is attached to the first wall of the first battery cell on which the pressure relief mechanism is located and the first wall of the second battery cell on which no pressure relief mechanism is provided. Therefore, the first wall of the second battery cell attached to the thermal management component may completely be designed as a heat dissipation surface. With this technical solution, an overall heat dissipation area of the battery can be effectively increased, which improves safety performance of the battery and is conducive to the development of the fast battery charging technology. Further, because the thermal management component is attached to the first wall of the first battery cell on which the pressure relief mechanism is located and the first wall of the second battery cell on which no pressure relief mechanism is provided, it is only necessary to provide a pressure relief region at a position corresponding to the pressure relief mechanism of the first battery cell in the thermal management component, to discharge the emissions from the first battery cell, while a region corresponding to the second battery cell may still accommodate fluid to regulate a temperature of the second battery cell, further improving overall performance of the battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of a battery cell according to an embodiment of this application;
FIG. 5 is a schematic structural diagram of a battery according to an embodiment of this application;
FIG. 6 is a locally enlarged schematic diagram of part A in FIG. 5;
FIG. 7 is a locally enlarged schematic diagram of part B in FIG. 5;
FIG. 8 is a schematic three-dimensional structural diagram of a battery according to an embodiment of this application;
FIG. 9 is a schematic three-dimensional structural diagram of a battery according to an embodiment of this application;
FIG. 10 is a schematic three-dimensional exploded structural view of a thermal management component in the embodiment shown in FIG. 8;
FIG. 11 is another schematic three-dimensional exploded structural view of the thermal management component in the embodiment shown in FIG. 8;
FIG. 12 is a schematic structural diagram of a battery cell according to an embodiment of this application;
FIG. 13 is a schematic three-dimensional diagram of a buffer member according to an embodiment of this application;
FIG. 14 is a schematic plan view of the buffer member in FIG. 13;
FIG. 15 is a schematic flowchart of a method for preparing battery according to an embodiment of this application; and
FIG. 16 is a schematic block diagram of an apparatus for preparing battery according to an embodiment of this application.

In the accompanying drawings, the figures are not drawn to scale.

### DETAILED DESCRIPTION

The following further describes implementations of this application in detail with reference to accompanying drawings and embodiments. The detailed description of the following embodiments and the accompanying drawings are used to exemplarily illustrate the principle of this application, but cannot be used to limit the scope of this application, that is, this application is not limited to the described embodiments.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Vertical" means being vertical with an allowable range of error other than being strictly vertical. "Parallel" means being parallel with an allowable range of error other than being strictly parallel.

The orientation terms appearing in the following description all are directions shown in the figures, and do not limit the specific structure of the application. In the descriptions of this application, it should be further noted that unless otherwise specified and defined explicitly, the terms "installment", "link", and "connection" should be understood in their general senses. For example, the terms may be a fixed connection, a detachable connection, or an integrated connection, or may be a direct connection, or an indirect connection through an intermediate medium. A person of ordinary skill in the art can understand specific meanings of these terms in this application based on specific situations.

The term "and/or" in this specification is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described in this application may combine with another embodiments.

In this application, a battery is a physical module that includes one or more battery cells to supply electric energy. For example, the battery mentioned in this application may include a battery module, a battery pack, or the like. A battery typically includes a box configured to enclose one or more battery cells. The box can prevent liquids or other foreign matters from affecting charging or discharging of the battery cells.

Optionally, the battery cell may include a lithium-ion secondary battery, a lithium-ion primary battery, a lithium-sulfur battery, a sodium/lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. The battery cell is typically divided into three types by packaging method: cylindrical battery cell, prismatic battery cell, and pouch battery cell. This is not limited in the embodiments of this application either.

The battery cell includes an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is coated on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector, and a current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. In order to guarantee that no fusing occurs when a large current passes, there are a plurality of positive tabs that are stacked together, and there are a plurality of negative tabs that are stacked together. A material of the separator may be polypropylene (Polypropylene, PP), polyethylene (Polyethylene, PE), or the like. In addition, the electrode assembly may be a wound structure or a laminated structure, but the embodiments of this application are not limited thereto.

The development of battery technology needs to consider many design factors, such as energy density, cycle life, discharge capacity, charge-discharge rate, and other performance parameters. In addition, safety of the battery also needs to be considered.

For batteries, a main safety hazard comes from the charging and discharging process. In order to improve safety performance of the battery, a pressure relief mechanism is generally provided for the battery cell. The pressure relief mechanism refers to an element or a component that is actuated to relieve internal pressure or discharge high-temperature gas when the internal pressure or temperature of the battery cell reaches a predetermined threshold. The predetermined threshold may be adjusted according to different design requirements. The predetermined threshold may depend on the material used for one or more of the positive electrode plate, the negative electrode plate, the electrolyte, and the separator in the battery cell. The pressure relief mechanism may employ an element or a part sensitive to pressure or temperature such that the pressure relief mechanism is actuated when the internal pressure or temperature of the battery cell reaches a predetermined threshold, thereby forming a channel for relieving the internal pressure or temperature.

"Actuate" mentioned in this application means that the pressure relief mechanism is put into action such that the internal pressure and temperature of the battery cell are relieved. The action that the pressure relief mechanism is put into may include but is not limited to, for example, cracking, tearing, or melting at least part of the pressure relief mechanism. When the pressure relief mechanism is actuated, high-pressure and high-temperature substances inside the battery cell are discharged from the pressure relief mechanism as emissions. In this way, the battery cell can relieve its pressure under controllable pressure or temperature, thereby avoiding more serious potential incidents.

The emissions from the battery cell mentioned in this application include but are not limited to: electrolyte, fragments of positive and negative electrode plates and separator because of dissolution or breaking, high-temperature and high-pressure gases and flames produced by reactions, and the like.

The pressure relief mechanism in the battery cell greatly influences the safety of the battery. For example, when the battery cell is short-circuited, overcharged, or the like, thermal runaway may be caused inside the battery cell, resulting in a sudden rise in pressure or temperature. In this case, actuation of the pressure relief mechanism may allow the internal pressure and temperature to be discharged out to prevent the battery cell from exploding or catching fire.

In addition to a pressure relief mechanism provided on the battery cell to guarantee the safety of the battery, a thermal management component may also be provided in the box for accommodating the battery cells. The thermal management component may be configured to accommodate fluid to regulate temperatures of a plurality of battery cells. The fluid here may be liquid or gas, and regulating temperatures refers to heating or cooling the plurality of battery cells. In the case of cooling or reducing temperatures of the battery cells, the thermal management component is configured to accommodate a cooling fluid to reduce the temperatures of the plurality of battery cells. In this case, the thermal management component may also be referred to as a cooling component, a cooling system, a cooling plate, or the like, and the fluid accommodated therein may also be referred to as a cooling medium or a cooling fluid, more specifically, a cooling liquid or a cooling gas. In addition, the thermal management component may also be configured to heat up the plurality of battery cells. This is not limited in this embodiment of this application. Optionally, the fluid may be circulated to achieve a better temperature regulation effect. Optionally, the fluid may be water, a mixture of water and ethylene glycol, air, or the like.

In some embodiments, the thermal management component may be utilized to separate the interior of the battery box into an electrical chamber that accommodates the battery cells and a collection chamber that collects emissions. When the pressure relief mechanism is actuated, the emissions from the battery cell enter the collection chamber through the thermal management component but do not enter the electrical chamber or only a small amount of the emissions enter the electrical chamber, thereby reducing the influence of the emissions on a busbar in the electrical chamber, so that safety of the battery can be enhanced.

The electrical chamber is used to accommodate the plurality of battery cells and the busbar. The electrical chamber may be sealed or unsealed. The electrical chamber provides a space for installing the battery cells and the busbar. In some embodiments, a structure for fixing the battery cells may also be provided in the electrical chamber. A shape of the electrical chamber may be determined according to the plurality of battery cells and the busbar that are to be accommodated. In some embodiments, the electrical chamber may be square with six walls. Because the battery cells in the electrical chamber are electrically connected to form a relatively high voltage output, the electrical chamber may also be referred to as a "high voltage chamber".

The busbar is used to implement electrical connection between the plurality of battery cells, for example, in parallel, in series, or in hybrid connection. The busbar may enable the electrical connection between the battery cells by connecting the electrode terminals of the battery cells. In some embodiments, the busbar may be fixed to the electrode terminals of battery cells by welding. Corresponding to the "high voltage chamber", the electrical connection formed by the busbar may also be referred to as a "high voltage connection".

The collection chamber is used to collect emissions, and may be sealed or unsealed. In some embodiments, the collection chamber may contain air or other gases. There is no electrical connection to the voltage output in the collection chamber. Corresponding to the "high pressure chamber", the collection chamber may also be referred to as a "low pressure chamber". Optionally, the collection chamber may also contain liquid, such as a cooling medium, or a component for accommodating the liquid, to further cool the emissions that enter the collection chamber. Further optionally, the gas or liquid in the collection chamber is circulated.

However, in this implementation, the pressure relief mechanism of the battery cell is disposed toward the thermal management component. The pressure relief mechanism has poor heat dissipation effect. A region in the thermal management component corresponding to the pressure relief mechanism of the battery cell needs to be used for discharging the emissions from the battery cell and therefore is unable to accommodate the fluid to regulate the temperature of the battery cell, resulting in that in the thermal management component, an area of a region that is used to regulate the temperatures of the battery cells is reduced. With the development of battery charging and discharging technology, the heat of the battery cells increases significantly during the rapid charging of the battery. But a relatively small area that is temperature regulated in the thermal management component may cause the battery cells to have a relatively high temperature rise, which is not conducive to rapid charging of the battery and also brings certain safety hazards.

In view of this, this application provides a technical solution. Among the plurality of battery cells of the battery, only the pressure relief mechanisms of the first battery cells are disposed opposite the thermal management component, and the pressure relief mechanisms of the second battery cells are not disposed opposite the thermal management component. Therefore, a surface of the second battery cell facing toward the thermal management component may completely be as a heat dissipation surface. With this technical solution, an overall heat dissipation area of the battery can be increased, which further improves safety performance of the battery and is conducive to the development of the fast battery charging technology. In addition, further, it is only necessary to provide a pressure relief region at a position corresponding to the pressure relief mechanism of the first battery cell in the thermal management component, to discharge the emissions from the first battery cell, while a region corresponding to the second battery cell may still accommodate fluid to regulate a temperature of the second battery cell. With this technical solution, the temperature regulation area for regulating the temperatures of the plurality of battery cells in the thermal management component can be increased, further improving safety performance of the battery.

The technical solutions described in this embodiment of this application are all applicable to various apparatuses that use batteries, for example, cell phones, portable devices, laptop computers, battery operated vehicles, electric toys, power tools, electric vehicles, ships, and spacecraft, for example, spacecraft including aircraft, rockets, space shuttles, and spacecraft. The technical solutions described in the embodiments of this application are applicable to various devices using batteries, such as mobile phones, portable devices, notebook computers, electric bicycles, electric toys, electric tools, electric vehicles, ships, and spacecraft. For example, the spacecraft includes planes, rockets, space shuttles, spaceships, and the like.

It should be understood that the technical solutions described in this embodiment of this application are not limited to the apparatus described above, and can be applied to all apparatuses that use batteries, but for the sake of concise description, in the following embodiments, the electric vehicle is used as an example.

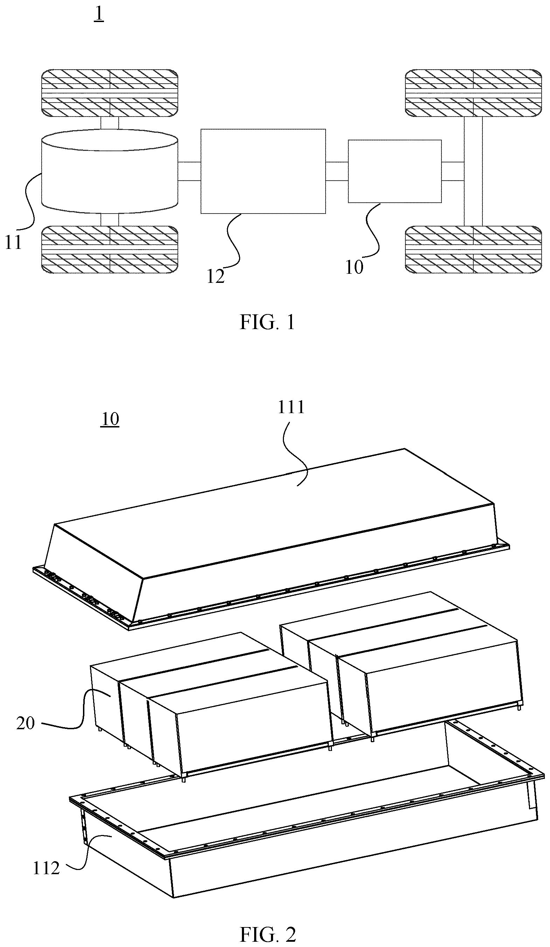

For example, FIG. 1 is a schematic structural diagram of a vehicle 1 in an embodiment of this application. The vehicle 1 may be a fossil fuel vehicle, a natural gas vehicle, or a new energy vehicle. The new energy vehicle may be a battery electric vehicle, a hybrid engine vehicle, a range-extended electric vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first combined into battery modules that are then combined into a battery.

For example, as shown in FIG. 2 that is a schematic structural diagram of a battery 10 according to an embodiment of this application, the battery 10 may include a plurality of battery cells 20. The battery 10 may further include a box (or a cover body) that has a hollow structure inside, and the plurality of battery cells 20 are accommodated in the box. As shown in FIG. 2, the box may include two portions that are referred to herein as a first portion 111 and a second portion 112 respectively. The first part 111 and the second part 112 are fitted together. Shapes of the first portion 111 and the second portion 112 may be determined according to a shape of a combined plurality of battery cells 20. Each of the first portion 111 and the second portion 112 may have an opening. For example, both the first portion 111 and the second portion 112 may be hollow cuboids and each has only one face as an opening face. The opening of the first portion 111 and the opening of the second portion 112 are disposed oppositely, and the first portion 111 and the second portion 112 are fitted with each other to form the box with a closed chamber. The plurality of battery cells 20 are connected in parallel, in series, or in hybrid connection, and then placed into the box formed by fitting the first portion 111 and the second portion 112.

Optionally, the battery 10 may also include other structures. Details are not described herein. For example, the battery 10 may also include a busbar that is used to implement electrical connection between the plurality of battery cells 20, for example, in parallel, in series, or in hybrid connection. Specifically, the busbar may enable the electrical connection between the battery cells 20 by connecting the electrode terminals of the battery cells 20. Further, the busbar may be fixed to the electrode terminals of battery cells 20 by welding. Electrical energy of the plurality of battery cells 20 can be further drawn out of the box through a conductive mechanism. Optionally, the conducting mechanism may also belong to the busbar.

According to different requirements for electricity, a quantity of the battery cells 20 may be set to any numerical value. The plurality of battery cells 20 may be connected in series, in parallel, or in hybrid connection to achieve a greater capacity or power. Because the quantity of battery cells 20 included in each battery 10 may be large, for ease of installation, the battery cells 20 may be arranged in groups, and each group of battery cells 20 forms a battery module. The quantity of battery cells 20 included in the battery module is not limited, and may be set according to requirements.

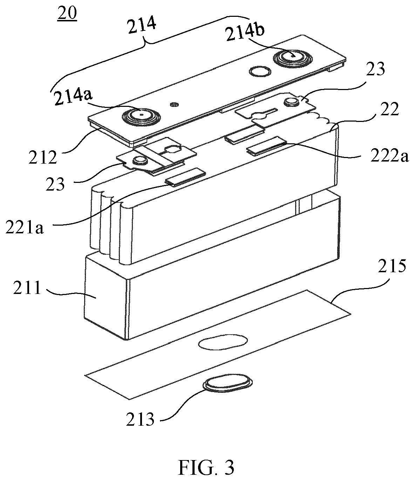

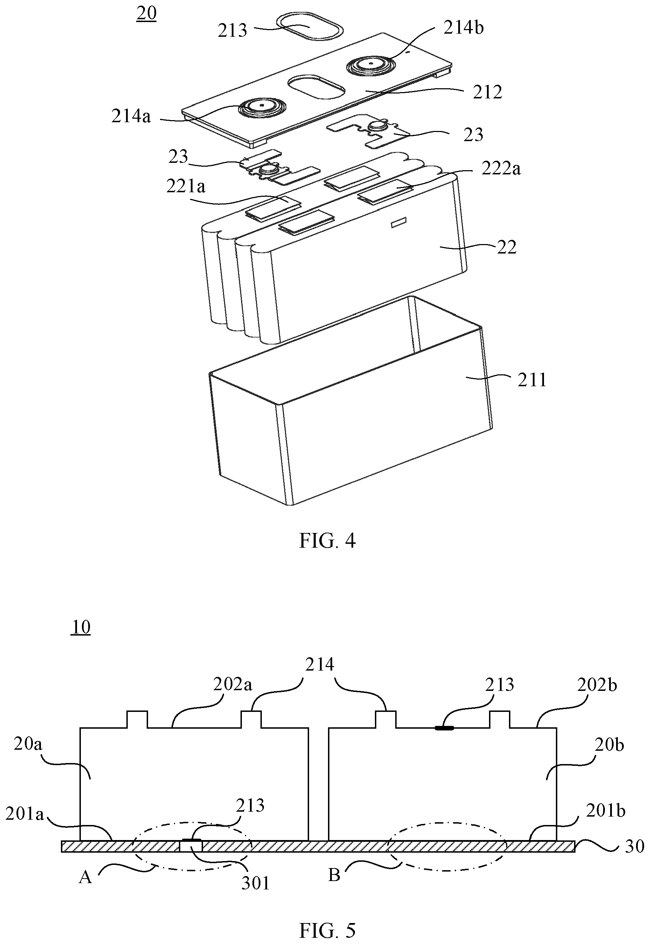

As shown in FIG. 3 and FIG. 4 that are schematic structural diagrams of two types of battery cells 20 according to an embodiment of this application, the battery cell 20 includes one or more electrode assemblies 22, a housing 211, and a cover plate 212. A wall of the housing 211 and the cover plate 212 each are referred to as a wall of the battery cell 20. The housing 211 depends on a combined shape of the one or more electrode assemblies 22. For example, the housing 211 may be a hollow cuboid, a cube, or a cylinder, and one surface of the housing 211 has an opening for placing the one or more electrode assemblies 22 into the housing 211. For example, when the housing 211 is a hollow cuboid or cube, one face of the housing 211 is an opening face, which means that the face has no wall so that the inside and the outside of the housing 211 are communicated. When the housing 211 is a hollow cylinder, the end face of the housing 211 is an opening face, which means that the end face has no wall so that the inside and the outside of the housing 211 are communicated. The cover plate 212 covers the opening and is connected to the housing 211 to form an enclosed cavity of the electrode assembly 22. The housing 211 is filled with an electrolyte, for example, a liquid electrolyte.

The battery cell 20 may also include two electrode terminals 214 that may be disposed on the cover plate 212. The cover plate 212 is generally in a shape of a flat plate, and two electrode terminals 214 are fixed on a flat surface of the cover plate 212. The two electrode terminals 214 are a positive electrode terminal 214a and a negative electrode terminal 214b respectively. Each electrode terminal 214 is correspondingly provided with a connecting member 23 or a current collecting member 23 that is located between the cover plate 212 and the electrode assembly 22 for electrically connecting the electrode assembly 22 and the electrode terminal 214.

As shown in FIG. 3 and FIG. 4, each electrode assembly 22 has a first tab 221a and a second tab 222a. The first tab 221a and the second tab 222a have opposite polarities. For example, when the first tab 221a is a positive tab, the second tab 222a is a negative tab. The first tabs 221a of the one or more electrode assemblies 22 are connected to one electrode terminal through one connecting member 23, and the second tabs 222a of the one or more electrode assemblies 22 are connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, based on actual usage requirements, a single electrode assembly 22 or a plurality of electrode assemblies 22 may be provided. As shown in FIG. 3 and FIG. 4, four independent electrode assemblies 22 are provided in the battery cell 20.

In an example, a pressure relief mechanism 213 may also be provided on a wall of the battery cell 20. The pressure relief mechanism 213 is configured to be actuated to relieve internal pressure or discharge high-temperature gas when the internal pressure or temperature of the battery cell 20 reaches a threshold.

Optionally, in an embodiment of this application, the pressure relief mechanism 213 and the electrode terminal 214 are disposed on different walls of the battery cell 20. In an example, as shown in FIG. 3, the electrode terminal 214 of the battery cell 20 may be disposed on a top wall of the battery cell 20, that is, the cover plate 212. The pressure relief mechanism 213 is disposed on another wall of the battery cell 20 that is different from the top wall. For example, the pressure relief mechanism 213 is disposed on a bottom wall 215 opposite the top wall. For ease of presentation, the bottom wall 215 is separated from the housing 211 in FIG. 3, but this does not define that the bottom side of the housing 211 has an opening.

In this embodiment of this application, the pressure relief mechanism 213 and the electrode terminal 214 are disposed on different walls of the battery cell 20, so that when the pressure relief mechanism 213 is actuated, the emissions from the battery cell 20 is further away from the electrode terminal 214, thereby reducing the influence of the emissions on the electrode terminal 214 and the busbar, so that the safety of the battery can be enhanced.

Further, when the electrode terminal 214 is disposed on the cover plate 212 of the battery cell 20, the pressure relief mechanism 213 is disposed on the bottom wall 215 of the battery cell 20, so that when the pressure relief mechanism 213 is actuated, emissions from the battery cell 20 is discharged to the bottom of the battery 10. In this way, danger of the emissions can be reduced by using the thermal management component and the like at the bottom of the battery 10, and the bottom of the battery 10 is usually far away from a user, thereby reducing harm to the user.

Optionally, in another embodiment of this application, the pressure relief mechanism 213 and the electrode terminal 214 are disposed on a same wall of the battery cell 20. In an example, as shown in FIG. 4, both the electrode terminal 214 and the pressure relief mechanism 213 may be disposed on a top wall of the battery cell 20, that is, the cover plate 212.

The pressure relief mechanism 213 and the electrode terminal 214 being disposed on the same wall of the battery cell 20, for example, on the cover plate 212 of the battery cell 20, can facilitate the processing and installation of the pressure relief mechanism 213 and the electrode terminal 214, and is conducive to improving the production efficiency of the battery 10.

The pressure relief mechanism 213 may be a part of the wall on which it is located, or may be a separate structure from the wall on which it is located, and may be fixed on the wall on which it is located by, for example, welding. For example, in the embodiment shown in FIG. 3, when the pressure relief mechanism 213 is a part of the bottom wall 215, the pressure relief mechanism 213 may be formed by providing a nick on the bottom wall 215. A thickness of the bottom wall 215 corresponding to the nick is less than a thickness of other regions of the pressure relief mechanism 213 other than at the nick. The weakest portion of the pressure relief mechanism 213 is at the nick. When gas generated by the battery cells 20 is too much and the internal pressure of the housing 211 rises and reaches a threshold, or the internal reactions of the battery cells 20 generate heat and cause internal temperature of the battery cells 20 to rise and reach a threshold, the pressure relief mechanism 213 may break at the nick, causing the inside and the outside of the housing 211 to be communicated and the gas pressure and temperature to be discharged out through the breakage of the pressure relief mechanism 213, thereby preventing the battery cell 20 from exploding.

In addition, the pressure relief mechanism 213 may be a variety of possible pressure relief mechanisms. This is not limited in this embodiment of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal air pressure of the battery cell 20 provided with the pressure relief mechanism 213 reaches the threshold.

FIG. 5 is another schematic structural diagram of a battery 10 according to an embodiment of this application.

As shown in FIG. 5, the battery 10 includes: a plurality of battery cells 20, where the plurality of battery cells 20 include first battery cells 20a and second battery cells 20b, a pressure relief mechanism 213 is provided on both a first wall 201a of the first battery cell 20a and a second wall 202b of the second battery cell 20b, and the pressure relief mechanism 213 is configured to be actuated when internal pressure or temperature of the battery cell 20 provided with the pressure relief mechanism 213 reaches a threshold, to relieve the internal pressure; and
a thermal management component 30, configured to accommodate fluid to regulate temperatures of the plurality of battery cells 20, where the thermal management component 30 is attached to the first wall 201a of the first battery cell 20a and a first wall 201b of the second battery cell 20b, the first wall 201b of the second battery cell 20b is different from the second wall 202b of the second battery cell 20b, the thermal management component 30 is provided with a pressure relief region 301 at a position corresponding to the pressure relief mechanism 213 of the first battery cell 20a, and the pressure relief region 301 is used to discharge emissions from the first battery cell 20a when the pressure relief mechanism 213 of the first battery cell 20a is actuated.

In some implementations of this application, in the plurality of battery cells 20, the first battery cell 20a and the second battery cell 20b may be in a same shape, which facilitates installation in the box of the battery 10. In an example, both the first battery cell 20a and the second battery cell 20b may be in a cuboid structure. The first wall 201a of the first battery cell 20a and the first wall 201b of the second battery cell 20b may be understood as walls facing a same direction in the cuboid structure. Similarly, the second wall 202a of the first battery cell 20a and the second wall 202b of the second battery cell 20b may be understood as other walls facing a same direction in the cuboid structure.

In another example, both the first battery cell 20a and the second battery cell 20b may be in a cylinder structure or other three-dimensional structure. The first wall 201a of the first battery cell 20a and the first wall 201b of the second battery cell 20b may be understood as walls facing a same direction in the three-dimensional structure. Similarly, the second wall 202a of the first battery cell 20a and the second wall 202b of the second battery cell 20b may be understood as other walls facing a same direction in the three-dimensional structure.

On a basis that the first wall 201a of the first battery cell 20a and the first wall 201b of the second battery cell 20b face the same direction, the thermal management component 30 is easily attached to the first wall of the first battery cell 20a 201a and the first wall 201b of the second battery cell 20b.

Optionally, in terms of a specific form, the thermal management member 30 may be a plate-shaped component, a tubular component, or a component of another form. The thermal management component 30 may accommodate fluid to regulate temperatures of the plurality of battery cells 20. In addition, in terms of a specific manner of installation, the thermal management component 30 may be disposed on the plurality of battery cells 20 by using fasteners, so that the thermal management component 30 is attached to the first wall 201a of the first battery cell 20a and a first wall 201b of the second battery cell 20b. Alternatively, the thermal management component 30 may be disposed on another structural member, such as box, in the battery 10 by using fasteners, so that the thermal management component 30 is attached to the first wall 201a of the first battery cell 20a and a first wall 201b of the second battery cell 20b.

In an example, as shown in FIG. 5, the thermal management member 30 may be a plate-shaped component. The plate-shaped thermal management member 30 can fully cover the first wall 201a of the first battery cell 20a and the first wall 201b of the second battery cell 20b in a large area, to improve temperature regulation capability of the thermal management component 30 and enhance safety of the battery 10. In addition, the plate-shaped thermal management component 30 may be further configured to isolate a space in which the first battery cell 20a and the second battery cell 20b are located from a space in which the emissions from the first battery cell 20a are located, to prevent the emissions from affecting the first battery cell 20a and the second battery cell 20b.

Because the pressure relief mechanism 213 is provided in the first wall 201a of the first battery cell 20a, and the pressure relief mechanism 213 is configured to be actuated when internal pressure or temperature of the first battery cell 20a reaches a threshold, to discharge the internal pressure of the first battery cell 20a, in the thermal management component 30 attached to the first wall 201a of the first battery cell 20a, a pressure relief region 301 is provided at a position corresponding to the pressure relief mechanism 213, and the pressure relief region 301 is used to discharge emissions from first battery cell 20a when the pressure relief mechanism 213 of the first battery cell 20a is actuated. Cooperation between the thermal management component 30 and the first battery cell 20a can enable the first battery cell 20a to discharge the internal pressure through the pressure relief mechanism 213 and the pressure relief region 301 in the thermal management component 30, which prevents the first battery cell 20a from exploding and improves the safety performance of the battery 10. Optionally, the pressure relief region 301 may be a through-hole running through the thermal management component 30, or a weak region, such as a region with low thickness or strength, that is easily damaged by the emissions when the pressure relief mechanism 213 is actuated.

In addition, the pressure relief mechanism 213 of the second battery cell 20b is not provided on the first wall 201b of the second battery cell 20b, but is provided on the second wall 202b different from the first wall 201b. The first wall 201b of the second battery cell 20b attached to the thermal management component 30 may completely be designed as a heat dissipation surface, increasing an overall heat dissipation area of the battery 10. Therefore, for the second battery cell 20b, the second battery cell 20b can discharge the internal pressure through the pressure relief mechanism 213 to prevent explosion and improve the safety performance of the battery 10; and in addition, the first wall 201b of the second battery cell 20b attached to the thermal management component 30 may completely be a heat dissipation surface, and with an increased overall heat dissipation area of the battery 10, the safety performance of the battery 10 can be further improved.

In conclusion, with the technical solution in this embodiment of this application, in the plurality of battery cells 20 of the battery 10, the pressure relief mechanism 213 of the first battery cell 20a is disposed on the first wall 201a of the first battery cell 20a, and the pressure relief mechanism 213 of the second battery cell 20b is disposed on the second wall 202b of the second battery cell 20b. The thermal management component 30 is attached to the first wall 201a of the first battery cell 20a on which the pressure relief mechanism 213 is located and the first wall 201b of the second battery cell 20b on which no pressure relief mechanism 213 is provided. Therefore, the first wall 201b of the second battery cell 20b attached to the thermal management component 30 may completely be designed as a heat dissipation surface. With this technical solution, an overall heat dissipation area of the battery 10 can be effectively increased, which further improves safety performance of the battery and is conducive to the development of the fast battery charging technology.

Further, because the thermal management component 30 is attached to the first wall 201a of the first battery cell 20a on which the pressure relief mechanism 213 is located and the first wall 201b of the second battery cell 20b on which no pressure relief mechanism 213 is provided, it is only necessary to provide a pressure relief region 301 at a position corresponding to the pressure relief mechanism 213 of the first battery cell 20a in the thermal management component 30, to discharge the emissions from the first battery cell 20a, while a region corresponding to the second battery cell 20b may still accommodate fluid to regulate a temperature of the second battery cell 20b. With this technical solution, both the first battery cell 20a and the second battery cell 20b can discharge the internal pressure through their pressure relief mechanisms 213, and the overall heat dissipation area of the battery 10 can be increased, further improving the safety performance of the battery 10.

Optionally, in the first battery cell 20, the first wall 201a provided with the pressure relief mechanism 213 is not provided with the electrode terminal 214. In other words, the electrode terminal 214 and the pressure relief mechanism 213 are provided on different walls of the first battery cell 20a.

With this technical solution, in the first battery cell 20a, the pressure relief mechanism 213 and the electrode terminal 214 are disposed on different walls, so that when the pressure relief mechanism 213 is actuated, the emissions from the first battery cell 20a is away from the electrode terminal 214, thereby reducing the influence of the emissions on the electrode terminal 214 and its related component, so that safety of the battery 10 can be further enhanced.

In an example, as shown in FIG. 5, in the first battery cell 20a, the electrode terminal 214 may be disposed on the second wall 202a of the first battery cell 20a. Optionally, the second wall 202a is a wall opposite the first wall 201a. With this technical solution, the emissions from the first battery cell 20a can be kept away from the electrode terminal 214 of the first battery cell 20a to the greatest extent, so as to guarantee the safety performance of the battery 10.

For a specific structure of the first battery cell 20a shown in FIG. 5, in an optional implementation, reference may be made to the related technical solutions of the embodiment shown in FIG. 3 above.

Specifically, in the second battery cell 20b, the first wall 201b attached to the thermal management member 30 is not provided with the electrode terminal 214, so that an entire region of the first wall 201b is a heat dissipation surface, and the thermal management member 30 can regulate a temperature of the entire region of the first wall 201b.

In an example, in the embodiment shown in FIG. 5, the second wall 202b of the second battery cell 20b provided with a pressure relief mechanism 213 may be disposed opposite the first wall 201b of the second battery cell 20b attached to the thermal management component 30, to minimize the influence of the emissions from the second battery cell 20b discharged through the pressure relief mechanism 213 on the thermal management component 30.

Optionally, as shown in FIG. 5, in the second battery cell 20b, both the electrode terminal 214 and the pressure relief mechanism 213 are disposed on the same wall, that is, both the electrode terminal 214 and the pressure relief mechanism 213 are disposed on the second wall 202b, to facilitate processing and installation of the electrode terminal 214 and the pressure relief mechanism 213 on the second battery cell 20b and improve production efficiency of the battery 10.

For a specific structure of the second battery cell 20b shown in FIG. 5, in an optional implementation, reference may be made to the related technical solutions of the embodiment shown in FIG. 4 above.

As can be learned from the foregoing description, because the pressure relief mechanism 213 of the first battery cell 20a is disposed on the first wall 201a attached to the thermal management component 30, and the emissions from the first battery cell 20a is discharged through the pressure relief region 301 in the thermal management component 30, the thermal management component 30 can isolate the emissions from the first battery cells 20a from the first battery cells 20a so that the emissions from the first battery cells 20a have less influence on the first battery cells 20a. While the pressure relief mechanism 213 of the second battery cell 20b is not provided on the first wall 201b attached to the thermal management component 30, therefore, the thermal management component 30 cannot isolate the emissions from the second battery cell 20b, so that the emissions from the second battery cell 20b have a greater influence on the second battery cell 20b.

Therefore, to reduce the influence of the emissions from the second battery cell 20b on the second battery cell 20b and comprehensively improve overall performance of the battery 10, the first battery cell 20a and second battery cell 20b may satisfy at least one of the following conditions:
(1) A specific capacity of a cathode material of the first battery cell 20a is greater than that of a cathode material of the second battery cell 20b;
(2) An energy density of the first battery cell 20a is greater than that of the second battery cell 20b; or
(3) A temperature of fumes discharged from the first battery cell 20a when the pressure relief mechanism 213 of the first battery cell 20a is actuated is higher than that of fumes discharged from the second battery cell 20b when the pressure relief mechanism 213 of the second battery cell 20b is actuated.

Under the condition that the first battery cell 20a and the second battery cell 20b satisfy the above condition (1) and/or condition (2), compared with the first battery cell 20a, the second battery cell 20b is less prone to thermal runaway. Therefore, a probability that the internal pressure or temperature in the second battery cell 20b reaches the threshold is lower. In other words, a probability that the second battery cell 20b discharges the emissions through its pressure relief mechanism 213 is lower, which can reduce the influence of the emissions from the second battery cell 20b discharged through its pressure relief mechanism 213 on the second battery cell 20b and improve safety of the battery 10.

By way of example and not limitation, the cathode material of the first battery cell 20a includes but is not limited to: nickel cobalt manganese (NiCoMn, NCM) ternary material, for example, NCM 811, NCM 622, NCM 523, or the like; and the cathode material of the second battery cell 20b includes but is not limited to: lithium iron phosphate (LiFePO, LFP) material, lithium titanate (LiTiO) material, NCM 111, or the like.

On this basis, compared with the second battery cell 20b, the cathode material of the first battery cell 20a has a larger specific capacity, the specific capacity may be a mass specific capacity (or gram capacity) or a volume specific capacity, and more electrical energy can be released per unit mass/unit volume of the first battery cell 20a; and/or, of the first battery cell 20a has a higher energy density, the energy density may be a mass energy density or volume energy density, and more electrical energy can be stored per unit mass/unit volume of the first battery cell 20a, thereby helping improve electrical performance of the battery 10.

Under the condition that the first battery cell 20a and the second battery cell 20b satisfy the above condition (3), even if the second battery cell 20b undergoes thermal runaway, when the pressure relief mechanism 213 of the second battery cell 20b is actuated, as compared with the first battery cell 20a, a temperature of the fumes discharged from the second battery cell 20b is lower. Therefore, the influence on the second battery cell 20b by the emissions from the second battery cell 20b discharged through the pressure relief mechanism 213 of the second battery cell 20b may be reduced, improving safety performance of the battery 10.

Further, by way of example but not by way of limitation, the first battery cell 20a and second battery cell 20b may satisfy at least one of the following conditions:
(1a) A mass specific capacity of the cathode material of the first battery cell 20a is greater than or equal to 180 mAh/g, and a mass specific capacity of the cathode material of the second battery cell 20b is less than or equal to 170 mAh/g;
(2a) A mass energy density of the first battery cell 20a is greater than or equal to 230 wh/kg, and a mass energy density of the second battery cell 20b is less than or equal to 220 wh/kg; or
(3a) The temperature of fumes discharged from the first battery cell 20a when the pressure relief mechanism 213 of the first battery cell 20a is actuated is higher than or equal to 600°C, and the temperature of fumes discharged from the second battery cell 20b when the pressure relief mechanism 213 of the second battery cell 20b is actuated is lower than or equal to 500°C.

Optionally, in the above condition (3a), in addition to the temperature threshold that may be satisfied by the fumes discharged from the first battery cell 20a and the second battery cell 20b, a time threshold may be further satisfied. For example, when the pressure relief mechanism 213 of the first battery cell 20a is actuated, the first battery cell 20a discharges the fumes with a temperature higher than or equal to 600°C, for a duration of greater than or equal to 3 seconds.

In some implementations of this embodiment of this application, the thermal management component 30 may include a flow channel 330 for accommodating fluid, where no fluid is provided in the pressure relief region 301.

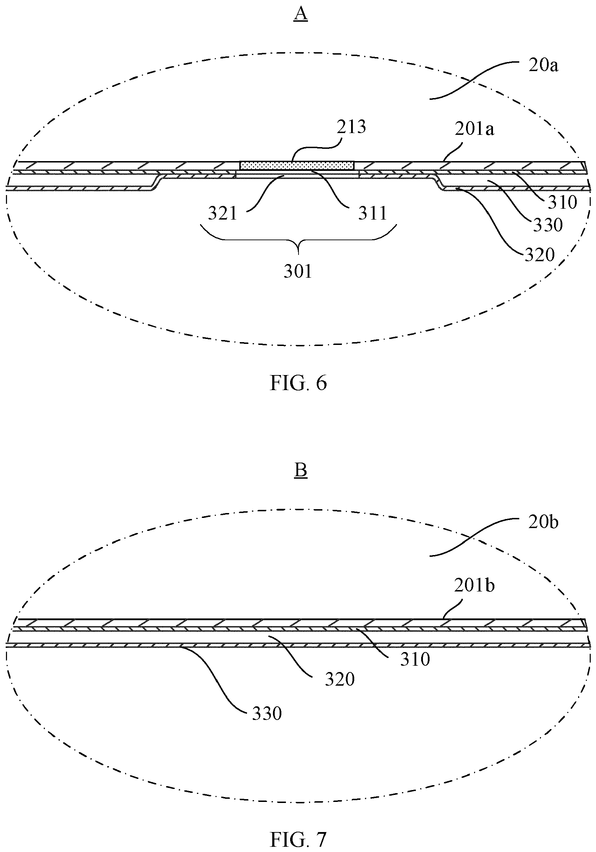

FIG. 6 is a locally enlarged schematic diagram of part A in FIG. 5.

As shown in FIG. 6, the thermal management component 30 may include a first heat conducting plate 310 and a second heat conducting plate 320. The first heat conducting plate 310 and the second heat conducting plate 320 form a flow channel 330 for accommodating fluid. The first heat conducting plate 310 is located between the first wall 201a of the first battery cell 20a and the second heat conducting plate 320 and is attached to the first wall 201a.

In the embodiment shown in FIG. 6, the pressure relief region 301 in the thermal management component 30 corresponds to the pressure relief mechanism 213 of the first battery cell 20a, and the pressure relief region 301 is not provided with the flow channel 330 so that no fluid is provided in the pressure relief region 301.

With this technical solution, a region in the thermal management component 30 corresponding to the pressure relief mechanism 213 of the first battery cell 20a is provided as a pressure relief region 301, and no flow channel 330 and fluid are provided in the pressure relief region 301, to prevent the flow channel 330 in the thermal management component 30 from being impacted when the pressure relief mechanism 213 of the first battery cell 20 is actuated, wasting the fluid in the thermal management component 30, and affecting the temperature regulation effect of the thermal management component 30 on the plurality of battery cells 20.

Optionally, as shown in FIG. 6, a region in the first heat conducting plate 310 corresponding to the pressure relief mechanism 213 of the first battery cell 20a is a first pressure relief region 311, a region in the second heat conducting plate 320 corresponding to the pressure relief mechanism 213 of the first battery cell 20a is a second pressure relief region 321, and the first pressure relief region 311 and the second pressure relief region 321 together form the pressure relief region 301 in this embodiment of this application.

In an example, the first pressure relief region 311 and/or the second pressure relief region 321 may be a weak region. Strength of the first pressure relief region 311 may be weaker than that of other regions in the first heat conducting plate 310, and/or strength of the second pressure relief region 321 may be weaker than that of other regions in the second heat conducting plate 320.

Optionally, the first pressure relief region 311 and/or the second pressure relief region 321 is provided with a groove opposite the pressure relief mechanism 213, and a bottom wall of the groove forms a weak region. When the pressure relief mechanism 213 is actuated, the emissions from the first battery cell 20a can damage the bottom wall of the groove and be discharged.

Optionally, a weak region may alternatively be formed in other ways in the first heat conducting plate 310 and/or the second heat conducting plate 320 as the first pressure relief region 311 and/or the second pressure relief region 321. For example, a nick is formed in the first heat conducting plate 310 to form a weak region as the first pressure relief region 311, or the like. This is not specifically limited in this application.

In another example, the first pressure relief region 311 and/or the second pressure relief region 321 may be a through hole. When the pressure relief mechanism 213 is actuated, the emissions from the first battery cell 20a may be directly discharged through the first pressure relief region 311 and/or the second pressure relief region 321 in form of a through hole.

Certainly, in other examples, in the first pressure relief region 311 and the second pressure relief region 321, one of which may be a through hole, and the other one may be designed as a weak region. The through hole facilitates passage of the emissions from the first battery cell 20a, and the weak region may block external influence on the pressure relief mechanism 213 and the first battery cell 20a, thereby improving safety and reliability of the battery 10.

FIG. 7 is a locally enlarged schematic diagram of part B in FIG. 5.

Optionally, as shown in FIG. 7, the thermal management component 30 is provided with a flow channel 330 at a position corresponding to the first wall 201b of the second battery cell 20b.

In addition to being located between the first wall 201a of the first battery cell 20a and the second heat conducting plate 320 and attached to the first wall 201a, the first heat conducting plate 310 may be located between the first wall 201b of the second battery cell 20b and the second heat conducting plate 320 and attached to the first wall 201b.

Optionally, the first wall 201b of the second battery cell 20b is not provided with a pressure relief mechanism 213. Therefore, the flow channel 330 may be provided, fully covering the first wall 201b of the second battery cell 20b, and the flow channel 330 with full coverage may provide good temperature regulation to the second battery cells 20b.

Optionally, in the plurality of battery cells 20 of the battery 10, the second battery cell is 20b is arranged in an edge region of the plurality of battery cells 20.

Because the battery cells 20 located in the edge regions of the plurality of battery cells 20 are greatly disturbed by an external environment, and the battery cells 20 located in the central region of the plurality of battery cells 20 are less affected by the external environment, the battery cells 20 located in the edge regions of the plurality of battery cells 20 in particular require the thermal management component 30 to regulate their temperatures so that they can be in a suitable temperature range and have good working performance and safety performance.

As described above, because the thermal management component 30 helps achieve a good temperature regulation effect on the second battery cells 20b, in the technical solutions of this embodiment of this application, the second battery cells 20b may be arranged in the edge regions of the plurality of battery cells 20, so that the thermal management component 30 regulates the temperatures of the second battery cells 20b located in the edge regions of the plurality of battery cells 20, reducing the influence of an external environment on the plurality of second battery cells 20b and improving overall performance of the battery 10.

In addition, because the energy density of the first battery cell 20a may be higher than that of the second battery cell 20b, and a temperature of the emissions from the first battery cell 20a may also be higher than a temperature of the second battery cell 20a, to prevent the emissions of a relatively high-temperature discharged from the first battery cell 20a from being directly discharged to the outside of the battery 10 and causing a safety hazard, in some possible implementations, the second battery cell 20b may be arranged close to a discharge valve of the battery 10 and the first battery cell 20a is arranged away from the discharge valve of the battery 10, where the discharge valve of the battery 10 may be disposed in the box of the battery 10, and is used to discharge the emissions from the first battery cell 20a and the emissions from the second battery cell 20 to the outside of the battery 10.

With this technical solution, the first battery cell 20a is relatively far away from the discharge valve of the battery 10 so that the emissions from the first battery cell 20a can pass through a specified discharge path in the battery 10 and then be discharged out of the battery 10, thereby reducing the influence of the high-temperature emissions from the first battery cell 20a on the external environment and improving safety performance of the battery 10.

Optionally, the plurality of battery cells 20 of the battery 10 may include at least one first battery cell 20a and at least one second battery cell 20b.

As described above, the thermal management component 30 provides good temperature regulation to the second battery cells 20b, while the first battery cells 20a has better electrical performance, such as higher energy density. Quantities of the first battery cells 20a and the second battery cells 20b in the battery 10 are controlled within a preset ratio range, which can balance the temperature adjustment effect of the thermal management component 30 and the energy density of the battery 10 so that the battery 10 reaches an optimal overall performance.

By way of example and not limitation, in some possible implementations, in the plurality of battery cells 20, a ratio of a quantity of the at least one second battery cell 20b to a quantity of the plurality of battery cells 20 ranges from 20% to 50%.

Specifically, the ratio of the quantity of the at least one second battery cell 20b to the quantity of the plurality of battery cells 20 being less than or equal to 50% can guarantee that the quantity of the first battery cells 20a accounts for more than half of the total quantity of the battery cells 20 in the whole battery 10, to guarantee that the energy density of the battery 10 is relatively high. In addition, the ratio of the quantity of the at least one second battery cell 20b to the quantity of the plurality of battery cells 20 being greater than or equal to 20% can guarantee the temperature regulation effect of the thermal management component 30 on the second battery cell 20b and the first battery cells 20a surrounding the second battery cell 20b, improving overall safety performance of the battery 10.

Optionally, in some implementations, the plurality of battery cells 20 include a row of battery cells 20 arranged in a first direction, and in the row of battery cells 20, one second battery cell 20b follows every N first battery cells 20a, where N is a positive integer, and N≤4.

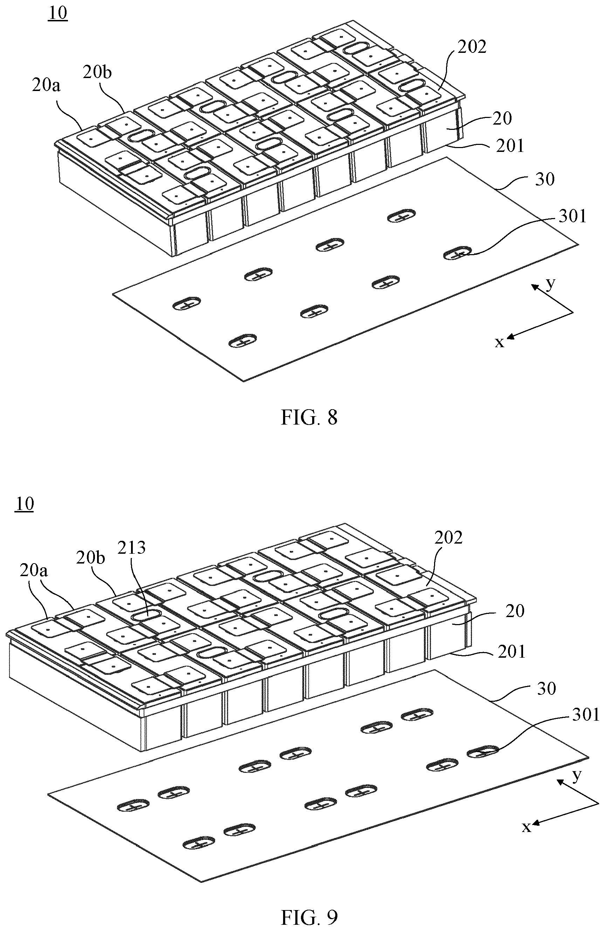

FIG. 8 and FIG. 9 are two schematic three-dimensional structural diagrams of a battery 10 according to an embodiment of this application.

In an example, as shown in FIG. 8 and FIG. 9, in this embodiment of this application, the battery 10 may include two rows of battery cells 20, and a plurality of battery cells 20 in each row of battery cells 20 are arranged in a first direction x, and two rows of battery cells 20 are arranged in a second direction y.

As shown in FIG. 8, in a row of battery cells 20, one second battery cell 20b follows every first battery cell 20a. In other words, in a row of battery cells 20, the first battery cell 20a and the second battery cell 20b are in sequence arranged and spaced apart. In the row of battery cells 20, a ratio of a quantity of the first battery cells 20a to a quantity of the second battery cells 20b is 1:1.

As shown in FIG. 9, in a row of battery cells 20, one second battery cell 20b follows every two first battery cell 20a. In the row of battery cells 20, a ratio of a quantity of the first battery cells 20a to a quantity of the second battery cells 20b is 2:1.

In addition to the embodiment shown in FIG. 8 and FIG. 9, in a row of battery cells 20, alternatively, one second battery cell 20b follows every three or four first battery cells 20a. In this case, a ratio of a quantity of the first battery cells 20a to a quantity of the second battery cells 20b is 3:1 or 4:1.

With this technical solution, a ratio of the quantity of the second battery cells 20b in the row of battery cells 20 to a total quantity of battery cells 20 in the row ranges from 20% to 50%, so that the thermal management component 30 provides good temperature regulation to the row of battery cells 20, and the battery cells 20 in the row have a relatively high energy density. In addition, in the row of battery cells 20, one second battery cell 20b follows every N first battery cells 20a, so that the second battery cell 20b can be evenly located in the row of battery cells 20, enabling the thermal management component 30 to provide uniform temperature regulation to the row of battery cells 20, further enhancing the temperature regulation effect of the thermal management component 30 on the row of battery cells 20.

Optionally, in some implementations, as shown in FIG. 8 and FIG. 9, in the two rows of battery cells 20, the battery cells 20 in each row are arranged in the same manner, and in the second direction y, two adjacent battery cells 20 are a same type of battery cells, that is, two adjacent battery cells 20 are both first battery cells 20a or second battery cells 20b.

Certainly, in other implementations, in the second direction y, two adj acent battery cells 20 may alternatively be different types of battery cells. For example, in the second direction y, one second battery cell 20b follows every N first battery cells 20a. In this way, in the second direction y, the second battery cells 20b can also be uniformly located in the plurality of rows of battery cells 20, thereby further improving the temperature regulation that the thermal management component 30 provides to the plurality of rows of battery cells 20.

It can be understood that the quantity of the rows of battery cells 20 and the quantity of the battery cells 20 in each row of battery cells 20 shown in FIG. 8 and FIG. 9 are illustrative and not limitative. The quantity and arrangement of the battery cells 20 are not specifically limited in this application.

In an example, in FIG. 8 and FIG. 9, first walls 201a of a plurality of first battery cells 20a and first walls 201b of a plurality of second battery cells 20b are located on a same plane, and the first walls 201a of the plurality of first battery cells 20a and the first walls 201b of the plurality of second battery cells 20b may be collectively referred to as a first wall 201 of the plurality of battery cells 20. Similarly, second walls 202a of the plurality of first battery cells 20a and second walls 202b of the plurality of second battery cells 20b are also located on a same plane, and the second walls 202a of the plurality of first battery cells 20a and the second walls 202b of the plurality of second battery cells 20b may be collectively referred to as a second wall 202 of the plurality of battery cells 20.

The first wall 201 of the plurality of battery cells 20 is a wall of the plurality of battery cells 20 on a side facing the thermal management component 30, and the second wall 202 of the plurality of battery cells 20 is a wall of the plurality of battery cells 20 on a side away from the thermal management component 30.

Corresponding to a plurality of pressure relief mechanisms 213 (not shown in the figures) of the plurality of first battery cells 20a provided on the first wall 201 in FIG. 8 and FIG. 9, the thermal management component 30 is provided with a plurality of pressure relief regions 301. The plurality of pressure relief regions 301 correspond to the plurality of pressure relief mechanisms 213 of the plurality of first battery cells 20a on one-to-one basis, and are arranged spaced apart in the thermal management component 30.

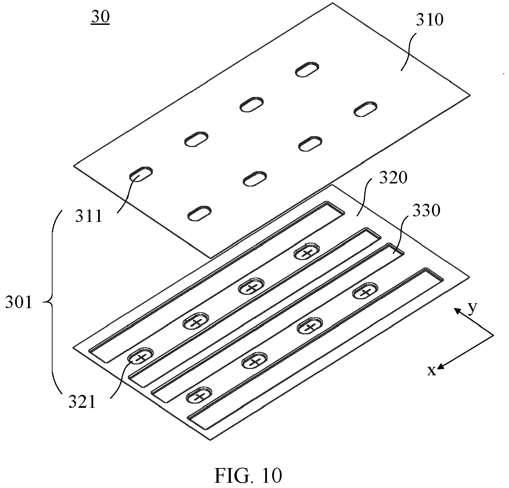

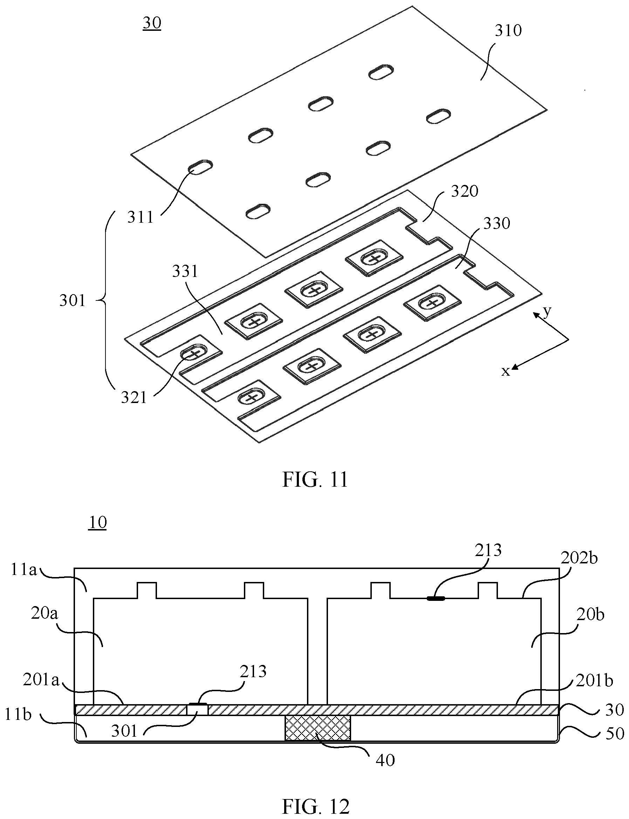

In an example, FIG. 10 and FIG. 11 are two schematic three-dimensional exploded structural views of the thermal management component 30 in the embodiment shown in FIG. 8.

As shown in FIG. 10 and FIG. 11, the thermal management component 30 may include a first heat conducting plate 310 and a second heat conducting plate 320 that are disposed opposite to each other. Optionally, in an example, the first heat-conducting plate 310 may be a flat plate structure, and the second heat-conducting plate 320 is provided with a recessed portion that is recessed in a direction away from the first heat-conducting plate 310, so as to form a flow channel 330 between the first heat-conducting plate 310 and the second heat-conducting plate 320. Alternatively, in other examples, the second heat-conducting plate 320 may be a flat plate structure, the first heat-conducting plate 310 is provided with a recessed portion that is recessed in a direction away the second heat-conducting plate 320, so as to form a flow channel 330 between the first heat-conducting plate 310 and the second heat-conducting plate 320. Or, optionally, in other examples, both the first heat-conducting plate 310 and the second heat-conducting plate 320 are provided with a recessed portion, so as to form a flow channel 330 between the first heat-conducting plate 310 and the second heat-conducting plate 320. A specific manner of forming the flow channel 330 is not limited in this embodiment of this application.

Optionally, in the embodiment shown in FIG. 10 and FIG. 11, the first pressure relief region 311 in the first heat conducting plate 310 may be a through hole structure, and dimensions of the through hole structure may be designed to adapt to dimensions of the pressure relief mechanism 213 of the first battery cell 20a. In addition, the second pressure relief region 321 in the second heat conducting plate 320 may be a weak region structure, and dimensions of the weak region structure may be designed to adapt to dimensions of the through hole structure.

In other embodiments, for related design solutions of the first pressure relief region 311 in the first heat conducting plate 310 and the second pressure relief region 321 in the second heat conducting plate 320, reference may be made to the relevant descriptions in the embodiment shown in FIG. 6 above. Details are not repeated herein. Specific forms of the first pressure relief region 311 and the second pressure relief region 321 are also not limited in this embodiment of this application.

Optionally, as shown in FIG. 10, in this example, the flow channel 330 is a strip-shaped flow channel 330. It can be seen with reference to FIG. 8 and FIG. 10, corresponding to a row of battery cells 20, a row of pressure relief regions 301 and two strip-shaped flow channels 330 are provided in the thermal management component 30. Both the two strip-shaped flow channels 330 and the row of pressure relief regions 301 extend in the first direction x, and in the second direction y, the two strip-shaped flow channels 330 are located at two sides of the row of pressure relief regions 301.

In this implementation, the flow channel 330 in the thermal management component 30 is easy to process, but does not fully cover the first wall 201b of the second battery cell 20b, and therefore, an optimal temperature adjustment effect of the thermal management component 30 is not achieved.

To further improve the temperature adjustment effect of the thermal management component 30, on a basis of the strip-shaped flow channel shown in FIG. 10 and as shown in FIG. 11, the flow channel 330 further includes a connecting section 331 that is used to connect two strip-shaped flow channels corresponding to a row of battery cells 20, and the connecting section 331 is located between two adjacent pressure relief regions 301 and disposed corresponding to the first wall 201b of the second battery cells 20b.

With the technical solution of this implementation, in the regions of the plurality of battery cells 20 corresponding to the thermal management component 30, in addition to the pressure relief region 301 provided in a region corresponding to the pressure relief mechanism 213 of the first battery cell 20a, a flow channel is provided in other regions, so as to fully regulate temperatures of the plurality of battery cells 20. In this way, an optimal temperature regulation effect of the thermal management component 30 is achieved, guaranteeing safety performance of the battery 10.

FIG. 12 is another schematic structural diagram of a battery 10 according to an embodiment of this application.

As shown in FIG. 12, in this embodiment of this application, the battery 10 further includes: a collection chamber 11b, configured to collect emissions from the first battery cell 20a when a pressure relief mechanism 213 of the first battery cell 20a is actuated; and a buffer member 40, disposed in the collection chamber 11b and configured to improve pressure-resistant strength of the collection chamber 11b.

Specifically, in this embodiment of this application, the battery 10 may further include an electrical chamber 11a and a collection chamber 11b. The thermal management component 30 is configured to isolate the electrical chamber 11a and the collection chamber 11b. The electrical chamber 11a is configured to accommodate a plurality of battery cells 20, and the collection chamber 1 1b is configured to collect the emissions from the first battery cell 20a when the pressure relief mechanism 213 of the first battery cell 20a is actuated.

In this embodiment of this application, the thermal management component 30 is used for isolating the electrical chamber 11a and the collection chamber 11b. In other words, the electrical chamber 11a for accommodating the plurality of battery cells 20 is separated from the collection chamber 11b for collecting the emissions. In this way, when the pressure relief mechanism 213 is actuated, the emissions from the first battery cell 20a enter the collection chamber 11b, but do not enter the electrical chamber 11a or only a small amount of the emissions enter the electrical chamber 11a, without affecting electrical connections in the electrical chamber 11a, so that safety of the battery 10 can be enhanced.

Further, the collection chamber 11b is also provided with a buffer member 40. Compared with a cavity structure, the buffer member 40 can provide buffering and energy absorption in the collection chamber 11b, so that the collection chamber 11b provided with the buffer member 40 has better pressure-resistant strength. In other words, when an external pressure acts on the battery 10, the collecting chamber 1 1b provided with the buffer member 40 can absorb most or all of the external pressure, thereby reducing or eliminating an influence of the external pressure on the thermal management component 30 and electrical components such as battery cells 20 in the electrical chamber 11a and improving pressure resistance and safety performance of the battery 10.

In some application scenarios, the battery 10 may be installed on the chassis of the electric vehicle and provide electric power for driving the electric vehicle. Specifically, the collection chamber 11b of the battery faces the chassis of the electric vehicle with respect to the electrical chamber 11a. The electric vehicle may be subject to bumps, flying rocks, and other undesirable conditions during driving, which would produce impacts and bottom ball strikes on the chassis of the electric vehicle and even the battery mounted on the chassis. With the technical solution of this embodiment of this application, the buffer member 40 in the collection chamber 11b can provide good anti-impact and anti-bottom ball strike functions to reduce or eliminate an influence on the battery caused by the undesirable conditions encountered during driving of the electric vehicle and enhance impact resistance and safety performance of the battery 10, thus further improving safety performance of the electric vehicle.

Optionally, to improve the buffering effect of the buffer member 40, the buffer member 40 in this embodiment of this application may be a layered structure, and in the collection chamber 11b, the buffer member 40 of the layered structure 40 is provided corresponding to positions of the plurality of battery cells 20.

Optionally, in one embodiment of this application, the thermal management component 30 has a wall shared by the electrical chamber 11a and the collection chamber 11b. As shown in FIG. 12, the thermal management component 30 may be both a wall of the electrical chamber 11a and a wall of the collection chamber 11b. In other words, the thermal management component 30 (or a part thereof) may directly serve as a wall shared by the electrical chamber 11a and the collection chamber 11b. In this way, the emissions from the first battery cell 20a may enter the collection chamber 11b through the thermal management component 30, and existence of the thermal management component 30 may isolate the emissions from the electrical chamber 11a as much as possible, thereby reducing the risk of the emissions and enhancing the safety performance of the battery 10.

Optionally, in some implementations, the buffer member 40 may be attached to a surface of the thermal management component 30 away from the plurality of battery cells 20 and disposed in the collection chamber 11b.

With this implementation, the buffer member 40 is disposed in the collection chamber 1 1b, which can improve the pressure resistance of the collection chamber 11b. Further, the buffer member 40 is attached to the thermal management component 30, which can improve the pressure resistance of the thermal management component 30, and reduce or eliminate a damage caused by an external pressure to the thermal management component 30, to guarantee that the thermal management component 30 does not lost the fluid therein and provides good temperature regulation.

Optionally, the buffer member 40 may be made of a heat-preservation material. The buffer member 40 made of the heat-preservation material may have a relatively large area and be attached to the thermal management component 30, especially to the flow channel 330 in the thermal management component 30. Therefore, the buffer member 40 can play a role of heat preservation in addition to the pressure-resistance and buffering performance, which can maintain temperature of the fluid in the thermal management component 30, prevent a temperature change of the fluid in the thermal management component 30, and further guarantee the temperature regulation effect of the thermal management component 30, to improve performance of the battery 10.

Optionally, the buffer member 40 may be made of a porous energy absorbing material. When an external pressure acts on the battery 10, the buffer member 40 made of the porous energy absorbing material can absorb the external pressure and withstand most or even all of the external pressure, thereby reducing or eliminating an influence of the external pressure on the thermal management component 30 and electrical components such as battery cells 20 in the electrical chamber 11a.

By way of example and not limitation, the material of the buffer member 40 may specifically be foam, for example, microcellular polypropylene (Microcellular Polypropylene, MPP) foam, silicone foam, or the like, which may have both energy-absorbing and heat-preservation characteristics and is suitable for use in this embodiment of this application.

Optionally, in one embodiment of this application, the collection chamber 11b may be formed by the thermal management component 30 and a protective member 50. For example, as shown in FIG. 12, the box 11 further includes a protective member 50. The protective member 50 serves to protect the thermal management component 30, and the protective member 50 and the thermal management component 30 form the collection chamber 11b.

The collection chamber 11b formed by the protective member 50 and the thermal management component 30 occupies no space in the box 11 for accommodating battery cells 20. Therefore, the collection chamber 11b with relatively large space can be provided, effectively collecting and buffering the emissions and reducing the risk of the emissions.

Optionally, in some embodiments of this application, the collection chamber 11b may be a sealed chamber. For example, a connection between the protective member 50 and the thermal management component 30 may be sealed by a sealing member.

Optionally, in some other embodiments of this application, the collection chamber 1 1b may be an unsealed chamber. For example, the collection chamber 11b may be communicated with the outside air of the battery 10, so that part of the emissions may be further discharged to the outside of the battery 10. Optionally, the protective member 50 may be provided with a discharge valve, and the collection chamber 1 1b may be communicated with the outside air of the battery 10 through the discharge valve.

Optionally, in this embodiment of this application, the buffer member 40 in the collection chamber 11b may be attached to the protective member 50 and/or the thermal management component 30, for example, fixedly attached to and disposed on the protective member 50 and/or the thermal management component 30 by using a fastener.

In an example, as shown in FIG. 12, the buffer member 40 is attached to both the protective member 50 and the thermal management component 30. In this case, a thickness of the buffer member 40 is relatively large, thereby enhancing rigidity of the buffer member 40 and further improving impact resistance of the battery 10.

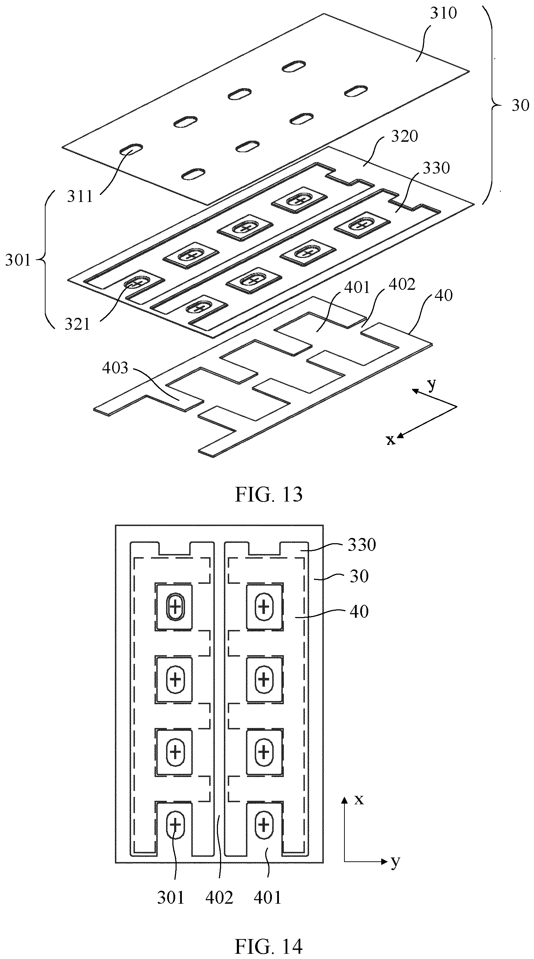

FIG. 13 is a schematic three-dimensional diagram of a buffer member 40 according to an embodiment of this application. FIG. 14 is a schematic plan view of the buffer member 40 in FIG. 13.

In this embodiment of this application, a relevant design of the buffer member 40 may be related to a position of the pressure relief region 301 in the thermal management component 30, that is, the relevant design of the buffer member 40 is related to a position of the pressure relief mechanism 213 of the first battery cell 20a.

As shown in FIG. 13 and FIG. 14, the buffer member 40 is provided with an opening 401, where the opening 401 is disposed opposite the pressure relief region 301 in the thermal management component 30 and configured to allow passage of the emissions from the first battery cell 20a that pass through the pressure relief region 301.

When the pressure relief mechanism 213 of the first battery cell 20a is actuated, and the first battery cell 20a relieves its internal pressure and discharges the emissions, the emissions have a relatively great impact and a relatively high temperature. Therefore, in addition to the pressure relief region 301 provided in the thermal management component 30 to facilitate passage of the emissions, the buffer member 40 also needs to be provided with an opening 401 at a position corresponding to the pressure relief region 301, to allow the emissions to pass through and prevent the buffer member 40 from blocking a discharge path of the emissions, thereby preventing the emission from affecting the first battery cell 20a and guaranteeing safety of the battery 10.

Optionally, in addition to the provision of the opening 401 in the buffer member 40 to allow the emissions from the first battery cell 20a to pass through, in other implementations, the buffer member 40 may not be attached to the thermal management member 30, and a gap may exist between the buffer member 40 and the thermal management component 30, where the gap may also allow the emissions from the first battery cell 20a to pass through without blocking the discharge path of the discharge.

Optionally, in the collection chamber 11b, the buffer member 40 is provided at a location corresponding to the second battery cell 20b, to protect the second battery cell 20b.

As shown in FIG. 13 and FIG. 14, corresponding to the plurality of pressure relief regions 301 arranged in a first direction x, a plurality of openings 401 are also arranged in the first direction x, and a physical buffer portion 403 of the buffer member 40 is formed between two adjacent openings 401, where the physical buffer portion 403 corresponds to the position of the second battery cell 20b in the plurality of battery cells 20, to protect the second battery cell 20b.

Certainly, in the collection chamber 11b, in addition to the provision of the physical buffer portion 403 of the buffer member 40 at the position corresponding to the second battery cell 20b, a physical buffer portion 403 of the buffer member 40 may also be provided at a position corresponding to the first battery cell 20a, where the physical buffer portion is located around the opening 401.

Optionally, as shown in FIG. 13 and FIG. 14, in this embodiment of this application, the buffer member 40 is provided with a gas channel 402, where the gas channel 402 is configured to guide the emissions from the first battery cell 20a out of the buffer member 40.

The buffer member 40 in the collection chamber 11b occupies part of space, which, after the emissions from the first battery cell 20a is discharged to the collection chamber 11b through the pressure relief region 301 of the thermal management component 30, is not conducive to high temperature gas and/or high-temperature liquid in the emissions to flow in the collection chamber 11b and therefore not conducive to cooling the emissions, bringing certain safety hazards to the battery 10.

Therefore, with the technical solution of this embodiment of this application, the gas channel 402 provided in the buffer member 40 can guide out the emissions from the first battery cell 20a, particularly high-temperature gas and/or high-temperature liquid in the emissions, to prevent the high-temperature emissions from being confined to the space in which the buffer member 40 is located, thereby preventing potential safety hazards caused by the high-temperature emissions. In addition, the emissions can also dissipate heat in a process of flowing in the gas channel 402. The gas channel 402 can be used to extend a movement path of the emissions in the collection chamber 11b. If the emissions pass through the collection chamber and then are discharged to the outside of the battery 10, a temperature of the emissions traveling a longer movement path is lower, reducing an influence of the emissions on an external environment of the battery 10 and further improving use safety of the battery 10.

Optionally, referring to FIG. 13 and FIG. 14, the gas channel 402 may be located between two adjacent rows of battery cells 20. Optionally, the gas channel 402 may be communicated with the opening 401, so that the emissions, after passing through the opening 401, is led out to the buffer member 40 through the gas channel 402. Cooperation between the opening 401 and the gas channel 402 can make the emissions flow smoother in the buffer member 402, thereby further helping cool the emissions.

As shown in FIG. 14, in this embodiment of this application, the buffer member 40 may be designed to adapt to a flow channel 330. In the buffer member 40, in addition to the opening 401 and the gas channel 402, other physical buffer portions are provided corresponding to the flow channel 330, which means that, on the premise that the emissions of the first battery cell 20a can be circulated and discharged, protection ability of the buffer member 40 to the flow channel 330 in the thermal management component 30 is improved to the maximum extent, and temperature of the fluid in the flow channel 330 is maintained.

An embodiment of this application further provides an electric apparatus, where the electric apparatus may include the battery 10 in the foregoing embodiments, and the battery 10 is configured to supply electric energy to the electric apparatus.

Optionally, the electric device can be a vehicle 1, a ship, or a spacecraft.

The foregoing describes the battery 10 and the electric apparatus in the embodiments of this application; and the following describes a method and device for preparing battery in the embodiments of this application. For those not described in detail, refer to the foregoing embodiments.

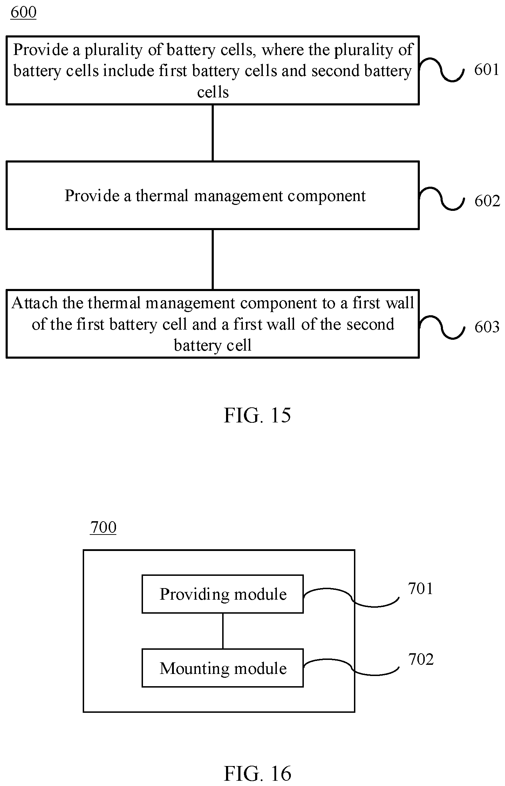

FIG. 15 is a schematic flowchart of a method 600 for preparing battery according to an embodiment of this application. As shown in FIG. 15, the method 600 may include the following steps.

601: Provide a plurality of battery cells 20, where the plurality of battery cells 20 include first battery cells 20a and second battery cells 20b, a pressure relief mechanism 213 is provided on both a first wall 201a of the first battery cell 20a and a second wall 202b of the second battery cell 20b, and the pressure relief mechanism 213 is configured to be actuated when internal pressure or temperature of the battery cell 20 provided with the pressure relief mechanism 213 reaches a threshold, to relieve the internal pressure.

602: Provide a thermal management component 30, where the thermal management component 30 is configured to accommodate fluid to regulate temperatures of the plurality of battery cells 20.

603: Attach the thermal management component 30 to the first wall 201a of the first battery cell 20a and a first wall 201b of the second battery cell 20b.

The first wall 201b of the second battery cell 20b is different from the second wall 202b of the second battery cell 20b, the thermal management component 30 is provided with a pressure relief region 301 at a position corresponding to the pressure relief mechanism 213 of the first battery cell 20a, and the pressure relief region 301 is used to discharge emissions from the first battery cell 20a when the pressure relief mechanism 213 of the first battery cell 20a is actuated.

FIG. 16 is a schematic block diagram of an apparatus 700 for preparing battery according to an embodiment of this application. As shown in FIG. 16, the apparatus 700 for preparing battery may include a providing module 701 and a mounting module 702.

The providing module 701 is configured to provide a plurality of battery cells 20, where the plurality of battery cells 20 include first battery cells 20a and second battery cells 20b, a pressure relief mechanism 213 is provided on both a first wall 201a of the first battery cell 20a and a second wall 202b of the second battery cell 20b, and the pressure relief mechanism 213 is configured to be actuated when internal pressure or temperature of the battery cell 20 provided with the pressure relief mechanism 213 reaches a threshold, to relieve the internal pressure.

The providing module 701 is further configured to provide a thermal management component 30, where the thermal management component 30 is configured to accommodate fluid to regulate temperatures of the plurality of battery cells 20.

The mounting module 702 is configured to attach the thermal management component 30 to the first wall 201a of the first battery cell 20a and a first wall 201b of the second battery cell 20b.

The first wall 201b of the second battery cell 20b is different from the second wall 202b of the second battery cell 20b, the thermal management component 30 is provided with a pressure relief region 301 at a position corresponding to the pressure relief mechanism 213 of the first battery cell 20a, and the pressure relief region 301 is used to discharge emissions from the first battery cell 20a when the pressure relief mechanism 213 of the first battery cell 20a is actuated.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery (10), **characterized by** comprising:
a plurality of battery cells (20), comprising first battery cells (20a) and second battery cells (20b), wherein a pressure relief mechanism (213) is provided on both a first wall (201a) of the first battery cell (20a) and a second wall (202b) of the second battery cell (20b), and the pressure relief mechanism (213) is configured to be actuated when internal pressure or temperature of the battery cell (20) provided with the pressure relief mechanism (213) reaches a threshold, to relieve the internal pressure; and
a thermal management component (30), configured to accommodate fluid to regulate temperatures of the plurality of battery cells (20), wherein the thermal management component (30) is attached to the first wall (201a) of the first battery cell (20a) and a first wall (201b) of the second battery cell (20b), the first wall (201b) of the second battery cell (20b) is different from the second wall (202b) of the second battery cell (20b), the thermal management component (30) is provided with a pressure relief region (301) at a position corresponding to the pressure relief mechanism (213) of the first battery cell (20a), and the pressure relief region (301) is used to discharge emissions from the first battery cell (20a) when the pressure relief mechanism (213) of the first battery cell (20a) is actuated.

2. The battery (10) according to claim 1, **characterized in that** the thermal management component (30) comprises a flow channel (330) for accommodating the fluid, wherein no flow channel (330) is provided in the pressure relief region (301).

3. The battery (10) according to claim 2, **characterized in that** the thermal management component (30) is provided with the flow channel (330) at a position corresponding to the first wall (201b) of the second battery cell (20b).

4. The battery (10) according to any one of claims 1 to 3, **characterized in that** an electrode terminal (214) is provided on both a second wall (202a) of the first battery cell (20a) and the second wall (202b) of the second battery cell (20b); and
the second wall (202a) of the first battery cell (20a) is a wall opposite the first wall (201a) of the first battery cell (20a), and the second wall (202b) of the second battery cell (20b) is a wall opposite the first wall (201b) of the second battery cell (20b).

5. The battery (10) according to any one of claims 1 to 4, **characterized in that** the first battery cell (20a) and the second battery cell (20b) satisfy at least one of the following conditions:
a specific capacity of a cathode material of the first battery cell (20a) is greater than that of a cathode material of the second battery cell (20b);
an energy density of the first battery cell (20a) is greater than that of the second battery cell (20b); or
a temperature of fumes discharged from the first battery cell (20a) when the pressure relief mechanism (213) of the first battery cell (20a) is actuated is higher than that of fumes discharged from the second battery cell (20b) when the pressure relief mechanism (213) of the second battery cell (20b) is actuated.

6. The battery (10) according to any one of claims 1 to 5, **characterized in that** the first battery cell (20a) and the second battery cell (20b) satisfy at least one of the following conditions:
a mass specific capacity of the cathode material of the first battery cell (20a) is greater than or equal to 180 mAh/g, and a mass specific capacity of the cathode material of the second battery cell (20b) is less than or equal to 170 mAh/g;
a mass energy density of the first battery cell (20a) is greater than or equal to 230 wh/kg, and a mass energy density of the second battery cell (20b) is less than or equal to 220 wh/kg; or
the temperature of fumes discharged from the first battery cell (20a) when the pressure relief mechanism (213) of the first battery cell (20a) is actuated is higher than or equal to 600°C, and the temperature of fumes discharged from the second battery cell (20b) when the pressure relief mechanism (213) of the second battery cell (20b) is actuated is lower than or equal to 500°C.

7. The battery (10) according to claim 5 or 6, **characterized in that** the plurality of battery cells (20) comprise at least one second battery cell (20b), and a ratio of a quantity of the at least one second battery cell (20b) to a quantity of the plurality of battery cells (20) ranges from 20% to 50%.

8. The battery (10) according to claim 7, **characterized in that** the plurality of battery cells (20) comprise a row of battery cells (20) arranged in a first direction, and in the row of battery cells (20), one second battery cell (20b) follows every N first battery cells (20a), wherein N is a positive integer, and N≤4.

9. The battery (10) according to any one of claims 1 to 8, **characterized in that** the second battery cell (20b) is disposed in an edge region of the plurality of battery cells (20).

10. The battery (10) according to any one of claims 1 to 9, **characterized in that** the battery (10) further comprises:
a collection chamber (1 1b), configured to collect the emissions from the first battery cell (20a) when the pressure relief mechanism (213) of the first battery cell (20a) is actuated; and
a buffer member (40), disposed in the collection chamber (11b) and configured to improve pressure-resistant strength of the collection chamber (11b).

11. The battery (10) according to claim 10, **characterized in that** the thermal management component (30) is a wall of the collection chamber (1 1b), and the buffer member (40) is attached to a surface of the thermal management component (30) away from the plurality of battery cells (20).

12. The battery (10) according to claim 10 or 11, **characterized in that** the buffer member (40) is provided with an opening (401), wherein the opening (401) is disposed opposite the pressure relief region (301) in the thermal management component (30) and configured to allow passage of the emissions from the first battery cell (20a) that pass through the pressure relief region (301).

13. The battery (10) according to any one of claims 10 to 12, **characterized in that** the buffer member (40) is provided with a gas channel (402), wherein the gas channel (402) is configured to guide the emissions from the first battery cell (20a) out of the buffer member (40).

14. The battery (10) according to any one of claims 10 to 13, **characterized in that** in the collection chamber (11b), the buffer member (40) is provided at a position corresponding to the second battery cell (20b).

15. The battery (10) according to any one of claims 10 to 14, **characterized in that** the buffer member (40) is made of a porous energy absorbing material and/or a heat-preservation material.

16. An electric apparatus, **characterized by** comprising the battery (10) according to any one of claims 1 to 15, wherein the battery (10) is configured to supply electric energy.

17. A method for preparing battery, **characterized by** comprising:
providing (601) a plurality of battery cells (20), wherein the plurality of battery cells (20) comprise first battery cells (20a) and second battery cells (20b), a pressure relief mechanism (213) is provided on both a first wall (201a) of the first battery cell (20a) and a second wall (202b) of the second battery cell (20b), and the pressure relief mechanism (213) is configured to be actuated when internal pressure or temperature of the battery cell (20) provided with the pressure relief mechanism (213) reaches a threshold, to relieve the internal pressure;
providing (602) a thermal management component (30), wherein the thermal management component (30) is configured to accommodate fluid to regulate temperatures of the plurality of battery cells (20); and
attaching (603) the thermal management component (30) to the first wall (201a) of the first battery cell (20a) and a first wall (201b) of the second battery cell;
wherein the first wall (201b) of the second battery cell (20b) is different from the second wall (202b) of the second battery cell (20b), the thermal management component (30) is provided with a pressure relief region (301) at a position corresponding to the pressure relief mechanism (213) of the first battery cell (20a), and the pressure relief region (301) is used to discharge emissions from the first battery cell (20a) when the pressure relief mechanism (213) of the first battery cell (20a) is actuated.

18. An apparatus for preparing battery, **characterized by** comprising:
a providing module (701), configured to:
provide a plurality of battery cells (20), wherein the plurality of battery cells (20) comprise first battery cells (20a) and second battery cells (20b), a pressure relief mechanism (213) is provided on both a first wall (201a) of the first battery cell (20a) and a second wall (202b) of the second battery cell (20b), and the pressure relief mechanism (213) is configured to be actuated when internal pressure or temperature of the battery cell (20) provided with the pressure relief mechanism (213) reaches a threshold, to relieve the internal pressure; and
provide a thermal management component (30), wherein the thermal management component (30) is configured to accommodate fluid to regulate temperatures of the plurality of battery cells (20); and
a mounting module (702), configured to attach the thermal management component (30) to the first wall (201a) of the first battery cell (20a) and a first wall (201b) of the second battery cell (20b), wherein the first wall (201b) of the second battery cell (20b) is different from the second wall (202b) of the second battery cell (20b), the thermal management component (30) is provided with a pressure relief region (301) at a position corresponding to the pressure relief mechanism (213) of the first battery cell (20a), and the pressure relief region (301) is used to discharge emissions from the first battery cell (20a) when the pressure relief mechanism (213) of the first battery cell (20a) is actuated.
